# EUROPEAN PATENT SPECIFICATION

(11) **EP 3 681 704 B1**
(45) Date of publication and mention of the grant of the patent: **13.11.2024**
(21) Application number: 18765641.8
(22) Date of filing: 07.09.2018
(51) Int. Cl.: B29C 70/54, B29B 11/16, B29C 70/22, D04H 3/115

(54) **FIBRE REINFORCEMENT ASSEMBLY**
FASERVERSTÄRKUNGSANORDNUNG
ENSEMBLE DE RENFORT FIBREUX

(30) Priority: 11.09.2017 GB 201714588
(43) Date of publication of application: 22.07.2020
(73) Proprietor: Hexcel Reinforcements UK Limited, Duxford, Cambridgeshire CB22 4QB (GB)
(72) Inventor: JAMES, Thomas, Duxford Cambridgeshire CB22 4QB (GB); FIELDER-WHITE, Louise, Duxford Cambridgeshire CB22 4QB (GB)
(74) Representative: TLIP Limited
(86) International application number: PCT/EP2018/074212
(87) International publication number: WO 2019/048646

(56) References cited:
- EP-A1- 1 595 689
- EP-A1- 2 875 937
- US-A- 3 526 565
- US-A1- 2002 192 467

## Description

The present invention is concerned with a novel form of fibre reinforcement assembly, and a method of manufacturing the same. More specifically, the present invention is concerned with a carbon fibre reinforcement assembly which facilitates more effective resin infusion in a moulding process, e.g. a resin transfer moulding process.

### BACKGROUND

For the avoidance of doubt, the term "reinforcement assembly" refers to a material having a first, reinforcement portion and a second portion (in this invention, a binder portion).

Composite materials in general comprise two primary phases- the reinforcement and the matrix. The present invention is concerned with reinforcements which are constructed from a fibre / fibrous material.

Fibre reinforcements contain multiple filaments and come in a variety of forms. The most common form is as a tow containing a plurality of individual filaments. When the filaments are co-linear but warped or twisted around into a bundle the tow is of an essentially circular cross section. When the filaments are collected into a single strip which is essentially flat, this is called a tape (in which the filaments are parallel and co-planar).

In a yarn, the filaments are also collected into a bundle, in which although they may not be strictly parallel, they extend in the same general direction along the main axis of the yarn. Yarns typically have fewer filaments then tows and they are therefore of a smaller thickness than a tow.

Tows, tapes and yarns are all types of "long-fibre" or elongate fibre reinforcements in which the fibres extend along a main, longitudinal reinforcement axis.

The tows or tapes may be woven to form a fabric or non-woven.

Elongate fibre reinforcements are used to form both woven and non-woven fabric reinforcements for the preparation of preforms which will eventually be infused with resin to form a composite component. As elongate fibre reinforcement consist of many filaments (typically thousands) which are in very close proximity, infusing these materials with a resin matrix is difficult and can result in uninfused (dry) areas in the fibre reinforcements.

Document US 2002/0192467 A1 discloses, according to its abstract, a method for manufacturing a reinforcing sheet containing at least one sheet made of a plurality of high tensile modulus fiber monofilaments. The sheet defines a first surface and a second surface. A first scrim is bonded to the first surface of the sheet and a second scrim is bonded to the second surface of the sheet.

Many fibrous materials are used in composite manufacture, such as carbon, glass and aramid. The present invention is applicable to carbon fibres and the preparation of carbon fibre reinforced polymers (CFRPs).

The invention aims to obviate and/or mitigate the above described problems and/or to provide improvements generally.

A further object of the present invention is to provide a fibre reinforcement assembly which enhances infusion of resin during composite manufacture.

### SUMMARY OF THE INVENTION

According to a first aspect of the invention there is provided a reinforcement assembly according to claim 1. According to the second aspect there is provided a method of forming a composite component according to claim 5.

Advantageously, once the reinforcement assembly is formed into a layered material in a preform the projecting portions form voids in the preform material which encourage better infusion of the resin matrix.

The binder comprises a length of fibrous thermoplastic polymer.

Preferably the binder becomes tacky at a predetermined temperature. The binder material may be selected from the following list:
- Polyamide;
- Phenoxy;
- Polyester;
- Acrylate;
- Polyethersulfone;
- Vinylacetate.

Preferably the second portion extends at an angle to the longitudinal axis, the angle being between 0 and 90 degrees.

The first portion is at least partially constructed from carbon fibres.

Preferably the first portion is in the form of a tape.

The first portion comprises a plurality of adjacent unidirectional fibres extending along the longitudinal axis.

Preferably the tape has a width at least 10 times greater than its thickness.

Preferably the tape has a width which is in the range of from 1 to 400 mm, preferably from 2 to 300 mm, more preferably from 3 to 200 mm and even more preferably from 4 to 150 mm and/or combinations of the aforesaid ranges. The width of the tape may also range between 4 to 100 mm, preferably from 6 to 80 mm or from 10 to 60 mm and/or combinations of the aforesaid ranges. In another embodiment the width of the tape is 1/N inch (1/N x 25.4 mm) with N being selected from 32, 16,8,4,2, or 1. The width of the tape is a constant and shows a variation in the range of from +/-10%, preferably from +/-5% and more preferably from +/-1 % or from +/- 0.5% per linear metre. The variation is measured by sampling the width of the tape over 20 equidistance positions along 1 m length of the tape and calculating the average width and the deviation in relation to this average width.

According to the invention there is provided a method of forming a composite component, comprising the steps of providing an elongate reinforcement assembly; building up a multiaxial preform from the elongate reinforcement assembly by laying down at least four laminae of the assembly at angles between -90 and +90° from the longitudinal direction of the multiaxial fabric; infusing a liquid matrix material into the layers; and curing the matrix material to form a product.

Preferably the laminae are interconnected by the binder. The individual elongate assemblies may also be interconnected by the binder. Preferably, they are interconnected by melt bonding.

### SPECIFIC DESCRIPTION

The present invention will now be described with reference to the accompanying Figures in which:
Figure 1 is a diagrammatic plan view of a first reinforcement assembly according to an example, not according to the claimed invention;
Figure 2 is a diagrammatic view of a manufacturing process according to an example, not according to the claimed invention to create the reinforcement assembly of Figure 1;
Figure 3 is a diagrammatic plan view of a prior art reinforcement assembly; and,
Figure 4 is a diagrammatic plan view of a second reinforcement assembly according to an embodiment of the present invention.

### Example, not according to the claimed invention

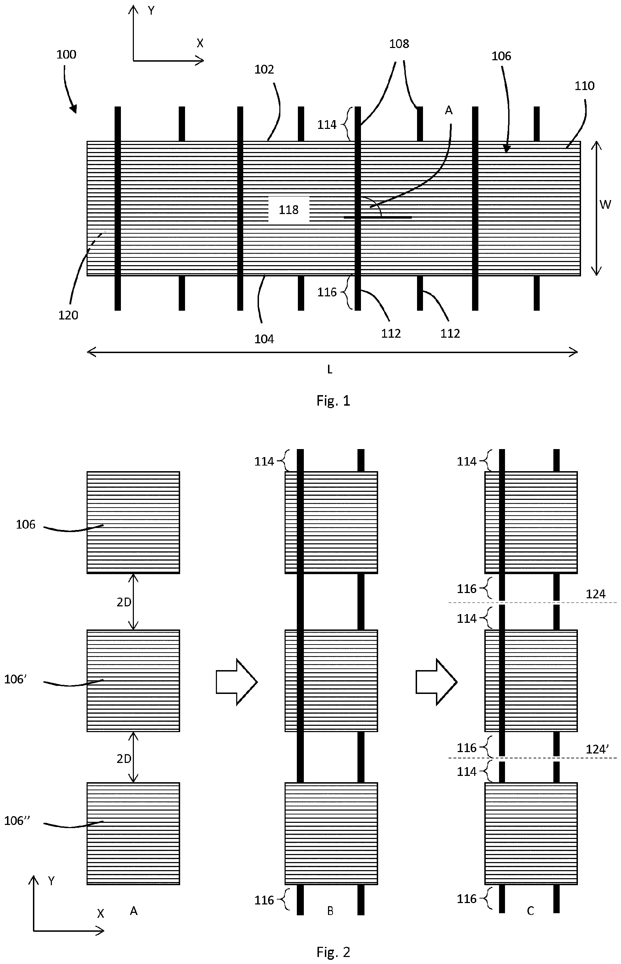

Referring to Figure 1, a section of elongate reinforcement assembly 100 is shown in plan view. The elongate reinforcement assembly 100 is generally planar having a first edge 102 and a second edge 104 (the edges running along the length of the elongate reinforcement assembly 100). A very short section of elongate reinforcement assembly 100 is shown having length L along a longitudinal axis X, but it will be understood that the elongate reinforcement assembly 100 is manufactured as a continuous strip of material, and thus L may vary significantly. The width of the elongate reinforcement assembly W along a transverse axis Y (that is the perpendicular distance between the edges 102, 104) is substantially constant along the length L. The elongate reinforcement assembly 100 has a length L and width W which significantly exceeds its thickness (by at least a factor of 10).100.

The elongate reinforcement assembly 100 is constructed from a first, reinforcement portion 106 and a second binder portion 108.

The reinforcement portion 106 comprises a plurality of individual fibres 110 which are constructed (in this embodiment) from carbon, and manufactured in a manner known in the art. The fibres of the reinforcement portion 106 run in parallel in the direction of the length L of the elongate reinforcement assembly 100, and as such the reinforcement portion 106 can be described as a "unidirectional" fibre tow or tape. Ordinarily, the fibres 110 of the reinforcement portion 106 do not adhere to each other.

The binder portion 108 comprises a plurality of individual binder sub-portions 112 which are discrete, and spaced-apart along the reinforcement portion 106. In this embodiment, the binder sub-portions 112 are equally spaced along the length L of the elongate reinforcement assembly 100.

Each binder sub-portion 112 extends at an angle A to the direction of the fibres 110 of the reinforcement portion 106. The angle A is 90 degrees in this embodiment- i.e. the sub-portions 112 generally extend in the width direction W of the elongate reinforcement assembly 100.

Each binder sub-portion 112 is constructed from a strip of fibrous thermoplastic material (known in the art as "scrim") which extends across the width W of the elongate reinforcement assembly 100 and extends past each edge 102, 104 to form two individual projecting regions 114, 116 respectively. The sub-portions are attached to alternating sides 118, 120 of the elongate reinforcement assembly 100.

The resulting elongate reinforcement assembly 100 has the appearance of a strip or tape of reinforcement material with spaced apart "hairs" projecting from each edge. It will be noted that because the thermoplastic scrim material is deformable, the projecting regions 114, 116 are also deformable.

The binder used in this embodiment has the following characteristics:
- melt point: 180 ⁰C;
- yarn thickness: 4 denier
- material: polyester

Turning to Figure 2, a method for the manufacture of the elongate reinforcement assembly 100 is shown.

At step A, the reinforcement portion 106 is provided in a continuous length (only a small portion of which is shown for clarity). Three such portions 106, 106', 106" are provided, each being spaced apart by gaps having gap distances 2D.

At step B, a plurality of binder strips 122 are provided which span each of the plurality of reinforcement portions 106, 106', 106" and the gaps therebetween. The strips are adhered to the reinforcement portions 106 by the application of heat to partially melt and thereby tackify them. The strips 112 on the first side 118 are applied before the reinforcement portion 106 is turned over and the strips applied to the second side 120. Each strip 122 overhangs the outermost reinforcement portions 106', 106" to provide the projecting region 114 for the first reinforcement portion 106 and the projection region 116 for the third reinforcement portion 106".

At step C, the binder strips 112 are cut along cut lines 124, 124' at the midpoint between adjacent reinforcement portions 106. This creates the further projecting region 114, 116 as shown.

The elongate reinforcement assembly 100 of Figure 1 is the resulting product.

The elongate reinforcement assembly 100 is then used in a composite manufacturing process. For example, the elongate reinforcement assembly 100 may be used to create a preform in which the reinforcement portions of adjacent elongate reinforcement assembly 100 are placed next to each other. The projecting regions 114, 116 then overlap the adjacent tows. The preform is formed of multiple layers of elongate reinforcement assembly 100, preferably in different directions.

The projecting regions 114, 116 force the adjacent layers to be spaced-apart, thus creating voids within the preform which encourages infiltration of resin in a resin transfer moulding process. This is advantageous.

It will be noted that the example may be adapted to other types of elongate reinforcement portions. For example, the first portion 106 may be a yarn or other type of elongate reinforcement.

### Embodiment of the invention

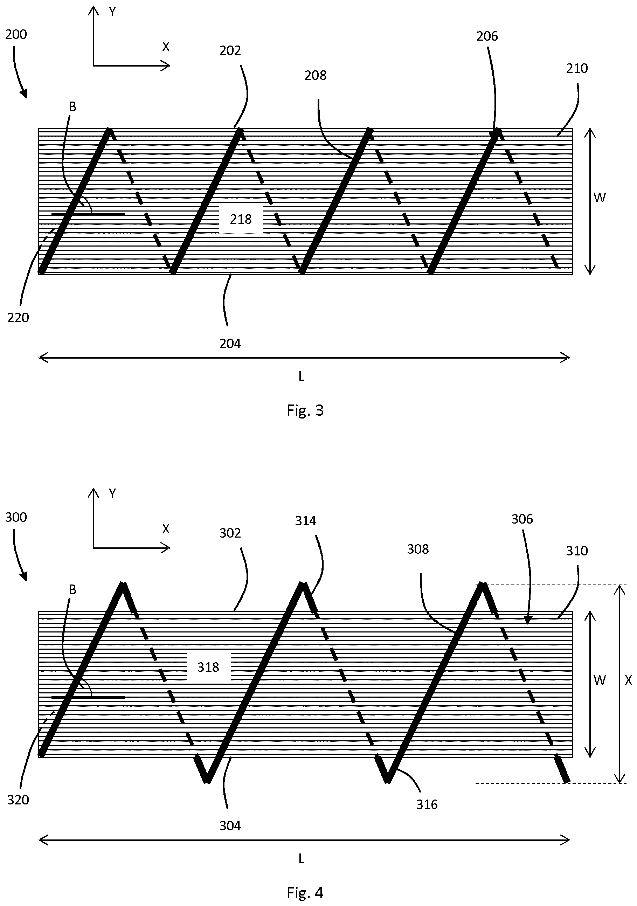

Referring to Figure 3, a section of known elongate reinforcement assembly 200 is shown in plan. The elongate reinforcement assembly 200 is generally planar having a first edge 202 and a second edge 204 (the edges running along the length of the elongate reinforcement assembly 200). A very short section of elongate reinforcement assembly 200 is shown having length L, but it will be understood that the elongate reinforcement assembly 200 is manufactured as a continuous strip of material, and thus L may vary significantly. The width of the the elongate reinforcement assembly W (that is the perpendicular distance between the edges 202, 206) is substantially constant along the length L. The elongate reinforcement assembly 200 is constructed from a reinforcement portion 206 and a binder portion 208.

The reinforcement portion 206 comprises a plurality of individual fibres 210 which are constructed from carbon, and manufactured in a manner known in the art. The reinforcement portion 206 has a length L and width W which significantly exceed its thickness (by at least a factor of 10) and as such the elongate reinforcement portion 206 can be referred to as a "tape" having a first side 218 and a second side 220. The fibres of the reinforcement portion 206 run in parallel in the direction of the length L of the elongate reinforcement assembly 200, and as such the reinforcement portion 206 can be described as a "unidirectional" fibre tow. Ordinarily, the fibres 210 of the reinforcement portion 206 do not adhere to each other.

The binder portion 208 comprises a strip of fibrous thermoplastic material (known in the art as "yarn") which wraps around the reinforcement portion 206 in a helical manner. In other words, the binder portion 208 is helically wound around the reinforcement portion 206. The winding angle B is shown as 60 degrees in this embodiment.

Referring to Figure 4, a section of elongate reinforcement assembly 300 in accordance with the invention is shown. It is similar to the section of elongate reinforcement assembly 200 with the exception of the configuration of the second, binder portion 308. Reference numerals for common features are shown 100 greater. The binder portion 312 of the elongate reinforcement assembly 300, instead of changing direction to wrap around the width W of the reinforcement portion 306 extends past the respective edges 302, 304 to form respective projecting regions 314, 316. In other words, the binder portion 312 forms a helix having a width X which is larger than W. The resulting projection portions 314, 316 are in the form of spaced-apart deformable loops.

The binder portion 208, 308 is created by wrapping the yarn around the reinforcement portion 206, 306 of the elongate reinforcement assembly 100.

Variations fall within the present invention.

The thermoplastic yarn for the embodiment of Figure 4 could be added by an automated fibre placement (AFP) head during the process of forming a preform. The yarn would be adhered to the reinforcement material before deposition. A multiaxial preform is formed from the reinforcement assembly by laying down at least four laminae of the assembly at angles between -90 and +90° from the longitudinal direction of the multiaxial fabric and this is followed by the step of infusing a liquid matrix material into the layers; and curing the matrix material to form a composite product.

Preferably the laminae are interconnected by the binder. The individual elongate assemblies may also be interconnected by the binder. Preferably, they are interconnected by melt bonding.

## Claims

1. An elongate reinforcement assembly (300) comprising:
a first portion (306) comprising a composite reinforcement material, the first portion being elongate having a first edge (302) and a second edge (304) each extending along a longitudinal axis (L) said first portion (306) comprising a plurality of adjacent unidirectional carbon fibres (310) extending along the longitudinal axis (L); and,
a second portion (308) comprising a binder, the second portion comprising a plurality of spaced-apart projecting regions (314, 316) extending past at least one of the edges (302, 304) of the first portion (306), wherein the binder extends into the projecting regions (314, 316);
and wherein the binder comprises a length of fibrous thermoplastic polymer **characterized in that** the length of thermoplastic polymer wraps around the first portion (306), extends along the longitudinal axis (L) and zigzags between the first (302) and second (304) edge forming at least three projecting regions (314, 316) in the form of loops.

2. An elongate reinforcement assembly (300) according to claim 1, in which the spaced-apart projecting regions (314, 316) extend past the first and second edges (302, 304) of the first portion (306).

3. A preform constructed from the elongate reinforcement assembly (300) according to claim 1 or claim 2, in which the preform comprises multiple layers of the elongate reinforcement assembly (300).

4. A composite component constructed from the elongate reinforcement assembly (300) according to claim 1 or claim 2, infiltrated with a matrix material.

5. A method of forming a composite component, comprising the steps of:
providing an elongate reinforcement assembly (300) according to claim 1 or claim 2;
building up a multiaxial preform from the elongate reinforcement assembly (300) by laying down at least four laminae of the assembly (300) at angles between -90 and +90° from the longitudinal direction of the multiaxial fabric,
infusing a liquid matrix material into the layers; and
curing the matrix material to form the composite component.

6. The method of claim 5, wherein the laminae are interconnected by the binder; preferably wherein the laminae are interconnected by melt bonding.

## Patentansprüche

1. Eine längliche Verstärkungsanordnung (300), die Folgendes beinhaltet:
einen ersten Anteil (306), der ein Verbundverstärkungsmaterial beinhaltet, wobei der erste Anteil länglich ist und eine erste Kante (302) und eine zweite Kante (304) aufweist, die sich jeweils entlang einer Längsachse (L) des ersten Anteils (306) erstrecken, und eine Vielzahl von benachbarten unidirektionalen Kohlenstofffasern (310) beinhaltet, die sich entlang der Längsachse (L) erstrecken; und
einen zweiten Anteil (308), der ein Bindemittel beinhaltet, wobei der zweite Anteil eine Vielzahl von beabstandeten vorstehenden Regionen (314, 316) beinhaltet, die sich über mindestens eine der Kanten (302, 304) des ersten Anteils (306) hinaus erstrecken, wobei sich das Bindemittel in die vorstehenden Regionen (314, 316) erstreckt;
und wobei das Bindemittel ein Stück eines fibrösen thermoplastischen Polymers beinhaltet, **dadurch gekennzeichnet, dass** das Stück des thermoplastischen Polymers um den ersten Anteil (306) gewickelt ist, sich entlang der Längsachse (L) erstreckt und zwischen der ersten (302) und der zweiten (304) Kante zickzackförmig verläuft, wobei mindestens drei vorstehende Regionen (314, 316) in der Form von Schlaufen gebildet werden.

2. Längliche Verstärkungsanordnung (300) gemäß Anspruch 1, wobei sich die beabstandeten vorstehenden Regionen (314, 316) über die erste und die zweite Kante (302, 304) des ersten Anteils (306) hinaus erstrecken.

3. Ein Vorformling, der aus der länglichen Verstärkungsanordnung (300) gemäß Anspruch 1 oder Anspruch 2 konstruiert ist, wobei der Vorformling mehrere Schichten der länglichen Verstärkungsanordnung (300) beinhaltet.

4. Eine Verbundkomponente, die aus der länglichen Verstärkungsanordnung (300) gemäß Anspruch 1 oder Anspruch 2 konstruiert ist, in die ein Matrixmaterial eingedrungen ist.

5. Ein Verfahren zum Bilden einer Verbundkomponente, das die folgenden Schritte beinhaltet:
Bereitstellen einer länglichen Verstärkungsanordnung (300) gemäß Anspruch 1 oder Anspruch 2;
Aufbauen eines multiaxialen Vorformlings aus der länglichen Verstärkungsanordnung (300) durch Ablegen von mindestens vier Lagen der Anordnung (300) in Winkeln zwischen -90 und +90° aus der Längsrichtung des multiaxialen Stoffs, Einziehenlassen eines flüssigen Matrixmaterials in die Schichten; und
Härten des Matrixmaterials, um die Verbundkomponente zu bilden.

6. Verfahren gemäß Anspruch 5, wobei die Lagen durch das Bindemittel untereinander verbunden sind; wobei die Lagen vorzugsweise durch Schmelzkleben untereinander verbunden sind.

## Revendications

1. Un ensemble de renfort allongé (300) comprenant :
une première portion (306) comprenant un matériau composite de renfort, la première portion étant allongée, ayant un premier bord (302) et un deuxième bord (304) s'étendant chacun le long d'un axe longitudinal (L), ladite première portion (306) comprenant une pluralité de fibres de carbone unidirectionnelles (310) adjacentes s'étendant le long de l'axe longitudinal (L) ; et,
une deuxième portion (308) comprenant un liant, la deuxième portion comprenant une pluralité de régions saillantes (314, 316) espacées les unes des autres s'étendant au-delà d'au moins un des bords (302, 304) de la première portion (306), où le liant s'étend dans les régions saillantes (314, 316) ;
et où le liant comprend une longueur de polymère thermoplastique fibreux, **caractérisé en ce que** la longueur de polymère thermoplastique s'enroule autour de la première portion (306), s'étend le long de l'axe longitudinal (L) et zigzague entre le premier (302) et le deuxième (304) bord, formant au moins trois régions saillantes (314, 316) sous la forme de boucles.

2. Un ensemble de renfort allongé (300) selon la revendication 1, dans lequel les régions saillantes (314, 316) les unes des autres espacées s'étendent au-delà des premier et deuxième bords (302, 304) de la première portion (306).

3. Une préforme construite à partir de l'ensemble de renfort allongé (300) selon la revendication 1 ou la revendication 2, dans laquelle la préforme comprend de multiples couches de l'ensemble de renfort allongé (300).

4. Un composant composite construit à partir de l'ensemble de renfort allongé (300) selon la revendication 1 ou la revendication 2, infiltré d'un matériau matrice.

5. Un procédé consistant à former un composant composite, comprenant les étapes suivantes :
le fait de fournir un ensemble de renfort allongé (300) selon la revendication 1 ou la revendication 2 ;
le fait de constituer une préforme multiaxiale à partir de l'ensemble de renfort allongé (300) en déposant au moins quatre feuillets de l'ensemble (300) à des angles compris entre - 90 et + 90° par rapport à la direction longitudinale du tissu multiaxial,
le fait de faire pénétrer un matériau matrice liquide dans les couches ; et
le fait de durcir le matériau matrice pour former le composant composite.

6. Le procédé de la revendication 5, où les feuillets sont reliés entre eux par le liant ; de préférence où les feuillets sont reliés entre eux par collage par fusion.
